# EUROPEAN PATENT SPECIFICATION

(11) **EP 0 457 756 B1**
(45) Date of publication and mention of the grant of the patent: **26.04.1995**
(21) Application number: 89903825.1
(22) Date of filing: 07.02.1989
(51) Int. Cl.: F04D 29/60

(54) **A DEVICE FOR ASSEMBLING AN IMPELLER ON A DRIVING SHAFT**
LAUFRAD-ANTRIEBSWELLENBEFESTIGUNGSVORRICHTUNG
DISPOSITIF D'ASSEMBLAGE D'UNE HELICE SUR UN ARBRE D'ENTRAINEMENT

(43) Date of publication of application: 27.11.1991
(73) Proprietor: ABB FLÄKT AKTIEBOLAG, S-104 81 Stockholm (SE)
(72) Inventor: GODICHON, Alain, F-71100 Saint-Rémy (FR)
(74) Representative: Hopfgarten, Nils
(86) International application number: PCT/SE89/00048
(87) International publication number: WO 90/09522

(56) References cited:
- US-A- 1 493 066
- US-A- 2 041 555
- US-A- 2 219 303
- US-A- 4 338 064
- US-A- 4 566 855

## Description

The present invention relates to a device for assembling an impeller on a driving shaft.

The torque delivered by drive motors is hardly ever constant but varies more and less. The variation or pulsation of the torque is accentuated if speed control is incorporated in the driving system for the impeller. Such driving systems can include e.g. electric motors with frequency converters or electronic variators, or diesel motors.

Such pulsating torques often give rise to resonance vibrations in parts of the machine e.g. the impeller blades, which results in fatigue failor of such parts of the machine.

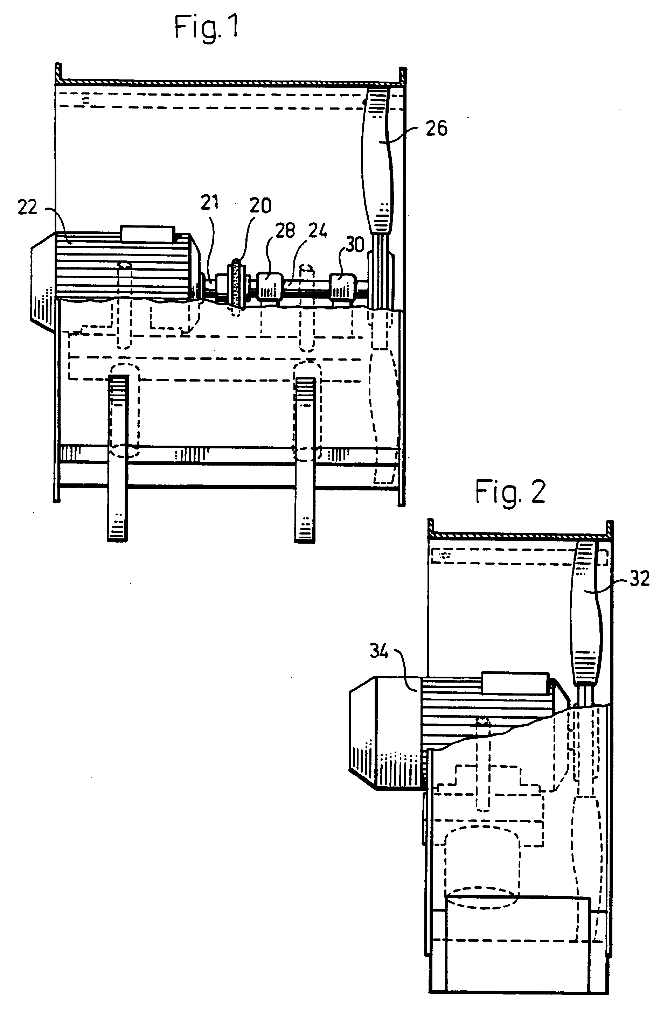

So far this problem has been solved by introducing an adapted elastic or resilient coupling between the driving shaft of the motor and the impeller shaft. This prior art solution is shown in Fig. 1 applied to a fan, where an elastic coupling is shown at 20 between the driving shaft 21 of the motor 22 and the fan shaft 24 which supports the fan inpeller 26. The fan shaft 24 is carried in separate bearings 28, 30. This solution for protecting the fan from pulsating torques from the motor is, however, expensive and takes up a large space and is therefore impossible to use for certain application.

The purpose of the present invention is to provide a new solution of the problems caused by pulsating torques in which the mentioned disadvantages of the prior art construction are remedied.

This purpose is obtained by a device according to claim 1.

With a device according to the invention the problem with pulsating torques are eliminated also for constructions where the impeller is directly supported by the driving shaft of the motor. Thus, the need for an elastic or resilient coupling between separated driving and impeller shafts is eliminated which simplifies the construction and makes it less expensive and especially provide a compact construction with a considerable reduction of the space required which is of utmost importance for certain fan applications.

In US,A, 1 493 066 a suggested solution is disclosed regarding balancing of inertia forces of aircraft propellers. Springs are arranged between splines, while the splines on the driving means also form sliding surfaces for preventing radial movement. In order to obtain a satisfactory radial stability the clearance has to be so little that there would be a friction force between the sliding surfaces, which counteracts the relative rotational movement. If the clearance is sufficiently large to overcome this drawback, the radial stability will be lost.

This problem is solved according to the invention by the arrangement of both an elastic or resilient element disposed between the impeller and driving shaft as well as a bearing disposed between the impeller and the driving shaft. The torque is transmitted from the driving shaft to the impeller through the resilient or elastic member thereby preventing or reducing torque pulsations, while the relative rotary movement between the driving shaft and impeller is controllably allowed or supported by the bearing. The roller or ball bearing provides a torque free interconnection, while preventing eccentric or radial movement between the impeller and a driving shaft.

According to an advantageous embodiment of the invention the device is disposed inside the hub of the impeller.

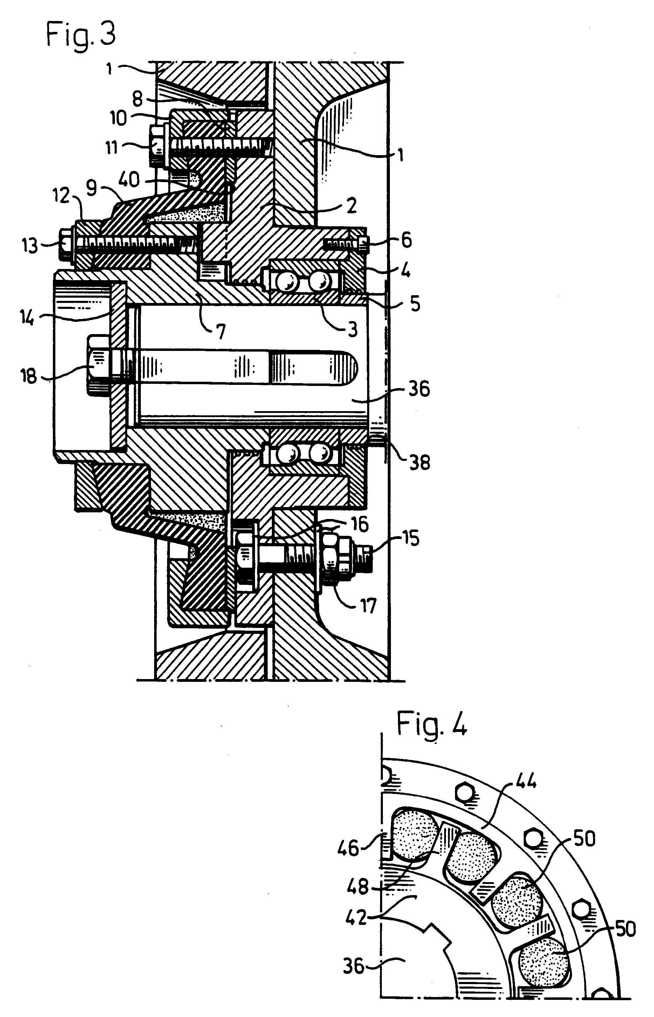

An embodiment exemplifying the invention will now be described more in detail with reference to Figures 2 and 3 of the drawings.

On the drawing Fig. 1 shows a prior art device for protecting a fan against pulsating torques, Fig. 2 illustrates a compact assembly of drive motor and fan where the device according to the invention can be used, Fig. 3 is a cross section of a fan impeller hub with an embodiment of the device according to the invention and Fig. 4 illustrates another example of providing an elastic or resilient coupling useful in a device according to the invention.

In Fig. 2 a compact assembly is shown where the fan impeller 32 is directly supported by the driving shaft from the motor 34.

A comparison of Figures 1 and 2 directly shows the different needs for space of the two assemblies with the fan shaft separated from the driving shaft and mounted in separate bearings as shown in Fig. 1 and the assembly according to Fig. 2, respectively.

In Fig. 3 an embodiment of the device according to the invention is shown installed in an assembly of the type shown in Fig. 2 for protecting the fan from pulsating torques from the drive motor by damping and filtering the pulsations such that resonance frequencies are not excited in e.g. impeller or shaft.

Thus, Fig. 3 shows a fan impeller 1 attached to an annular plate 2 by a bolted joint 15, 16, 17. To this plate a cover 4 is attached at 6 and by this cover 4 a ball bearing 3 is fixed in axial direction on the driving shaft 36. Inside the cover 4 a distance ring is positioned between the bearing 3 and a shoulder 38 on the driving shaft 36.

An elastic annular element 9 is also secured to the plate 2. This element 9 is clamped towards a centering ring 8 by screws 11 and a clamp ring 10. This ring 8 is fixed in radial direction between the clamp ring 10 and a shoulder 40 on the plate 2. With this arrangement the torque is transmitted from elastic ring 9 to the plate 2 through the contact surfaces of the centering ring 8 towards the elastic ring 9 and the plate 2.

The elastic ring 9 is also secured to the hub part 7 by a second clamp ring 12 and screws 13. The hub part 7 in its turn is keyed on the driving shaft 36 and screwed axially at 14, 18. Also this connection is designed such that the torque is transmitted from the driving shaft 36 to the elastic ring 9, substantially through the contact surfaces between the elastic ring 9, on one hand, and the hub part 7 and the clamp ring 12, on the other.

As indicated above a key (not shown) is used for the torque transmission between the shaft 36 and the hub 7. The hub part 7 is screwed axially on the driving shaft 36 by the bolt 18 and the washer 14. Thus, with the bolt 18 the whole hub construction with the device according to the invention is tightened on the driving shaft 36 towards the shoulder 38.

The torque from the driving shaft 36 is thus transmitted to the impeller 1 through the elastic ring 9. Pulsations or variations in the torque from the driving shaft 36 are damped or filtered due to the function of the elastic ring 9 which absorbs these pulsations and variations by admitting a certain rotary motion between impeller 1 and driving shaft 36 by the bearing 3 which is centering the impeller 1 on the driving shaft 36 in radial direction with a small clearance.

The elastic ring which forms one example of realizing the elastic coupling is preferably made of rubber, and the bearing can be of any suitable type, such as a ball bearing, a roller bearing, a plain bearing, or a bearing comprising a bushing in which the driving shaft can rotate.

In figure 4 a second embodiment of the invention is shown. In this embodiment the elastic or resilient coupling between the driving shaft and the impeller comprises a toth wheel 42 disposed inside a surrounding cylinder 44 having inwardly directed teeth or projections 46. In the spaces between adjacent teeth 46 of the cylinder 44 and those 48 of the wheel 42 pads 50 of an elastic material, such as rubber, are provided. By attaching the driving shaft 36 to the tooth wheel 42 and the impeller 1 to the cylinder 44 an elastic coupling is realized which will damp or filter pulsations and variations in the torque from the driving shaft 36.

It is also possible to provide an elastic or resilient coupling between the driving shaft and the impeller by means of springs.

The device according to the invention is applicable to fans up to a certain size. For very large fans the impeller can normally no longer be supported by the driving shaft from the motor because of its large size and weight. For such large impellers an arrangement of the type shown in Fig. 1 must be used.

Tests have been performed with the device according to the invention installed on an axial fan with the fan impeller directly fitted on the end of the motor driving shaft. A drive system of 75 kW with a variable speed was used. With a rigid assembly on the motor driving shaft the first natural mode of vibration of the blades was excited at a high level by the pulsating torque. With an assembly comprising the device according to the invention the amplitude of the vibrations at the resonance speed was reduced by a factor of about 40.

Another advantage achieved with the device according to the invention is that a softer start of the fan can be obtained which is of importance for certain applications.

The device according to the invention is useful for fans of axial as well as centrifugal types and can also be used on other kinds of turbomachineries.

## Claims

1. A device for assembling an impeller (1) on a driving shaft (36) comprising at least one elastic or resilient element (9,50) mounted between said shaft and said impeller to transmit the torque from said shaft to said impeller, **characterized** in that said impeller (1) is supported on the driving shaft (36) by a radial bearing (3) having a small radial clearance thereby limiting relative radial movement between said driving shaft and said impeller and admitting a relative rotary motion between impeller and shaft.

2. The device according to anyone of the claim 1, **characterized** in that said radial bearing (3) comprises a ball bearing, or a roller bearing, or a plain bearing, or a movable bushing.

3. The device according to anyone of the claims 1 or 2, **characterized** in that said radial bearing (3) and elastic or resilient element are disposed inside a hub part of said impeller (1).

## Patentansprüche

1. Vorrichtung zum Anbringen eines Laufrads (1) auf einer Antriebswelle (36), umfassend zumindest ein nachgiebiges oder elastisches, federndes Element (9, 50), das zwischen der Welle und dem Laufrad zum Übertragen des Drehmoments von der Welle auf das Laufrad befestigt ist, dadurch
**gekennzeichnet,** daß das Laufrad (1) auf der Antriebswelle (36) durch ein Radiallager (3), das ein kleines radiales Spiel aufweist, getragen wird, damit eine relative radiale Bewegung zwischen der Antriebswelle und dem Laufrad begrenzt wird und eine relative Drehbewegung zwischen dem Laufrad und der Welle zugelassen wird.

2. Vorrichtung nach Anspruch 1, dadurch gekennzeichnet, daß das Radiallager (3) ein Kugellager oder ein Rollenlager oder ein Gleitlager oder eine bewegbare Laufbuchse umfaßt.

3. Vorrichtung nach einem der Ansprüche 1 oder 2, dadurch gekennzeichnet, daß das Radiallager (3) und das nachgiebige oder elastische, federnde Element innerhalb eines Nabenteils des Laufrads (1) angeordnet sind.

## Revendications

1. Dispositif pour assembler une roue d'hélice (1) sur un arbre d'entraînement (36) comprenant au moins un élément élastique ou apte à céder (9, 50) monté entre ledit arbre et ladite hélice pour transmettre le couple dudit arbre à ladite hélice, caractérisé en ce que ladite hélice (1) est supportée sur l'arbre d'entraînement (36) par un palier radial (36) ayant un petit jeu radial en limitant ainsi un mouvement radial relatif entre ledit arbre d'entraînement et ladite hélice et en admettant un mouvement rotatif relatif entre l'hélice et l'arbre.

2. Dispositif selon la revendication 1, caractérisé en ce que ledit palier radial (3) comprend un palier à billes, ou un palier à roulement ou un palier plein, ou bien une boîte mobile.

3. Dispositif selon l'une des revendications 1 ou 2, caractérisé en ce que ledit palier radial (3) et l'élément élastique ou apte à céder sont disposés à l'intérieur d'une partie de moyeu de ladite roue d'hélice (1).
